# EUROPEAN PATENT SPECIFICATION

(11) **EP 0 523 622 B1**
(45) Date of publication and mention of the grant of the patent: **05.03.1997**
(21) Application number: 92111974.9
(22) Date of filing: 14.07.1992
(51) Int. Cl.: G11B 7/135, G11B 7/09, G11B 7/085

(54) **Mirror drive mechanism in optical disc player**
Spiegelantriebsmechanismus eines optischen Plattenspielers
Mécanisme d'entraînement pour un miroir d'un lecteur de disque optique

(30) Priority: 16.07.1991 JP 175264/91
(43) Date of publication of application: 20.01.1993
(73) Proprietor: SHARP KABUSHIKI KAISHA, Osaka (JP)
(72) Inventor: Sekimoto, Yoshihiro, Nara-shi, Nara-ken (JP); Yamamoto, Yasuhiro, Tenri-shi, Nara-ken (JP); Ueyama, Tetsuo, Nara-shi, Nara-ken (JP); Sato, Hideaki, Yamatokoriyama-shi, Nara-ken (JP)
(74) Representative: TER MEER - MÜLLER - STEINMEISTER & PARTNER

(56) References cited:
- EP-A- 0 051 331
- PATENT ABSTRACTS OF JAPAN vol. 15, no. 352 (P-1248) 6 September 1991 & JP-A-03 134 826

## Description

### BACKGROUND OF THE INVENTION

### (Field of the Invention)

The present invention relates to an optical pickup device comprising a mirror drive mechanism for angularly guiding a beam of light in accordance with the precharacterizing part of Claim 1. Such an optical pickup device can be used in an optical information recording and/or reproducing apparatus and is known from JP laid-open patent publication no. 3-1410 43, published June 17, 1991.

### (Description of the Prior Art)

The optical information recording and/or reproducing apparatus, which is hereinafter referred to as an optical disc player, generally makes use of a magneto-optical disc. For selectively recording or reproducing information on or from the magneto-optical disc, the optical disc player is equipped with an optical pick-up assembly which is generally available in two types; one-piece model and two-piece model. Both models utilize a mirror drive mechanism for oscillating a reflecting mirror used to deflect a beam of light travelling between at least one of a source of light and a photosensor and the recording medium.

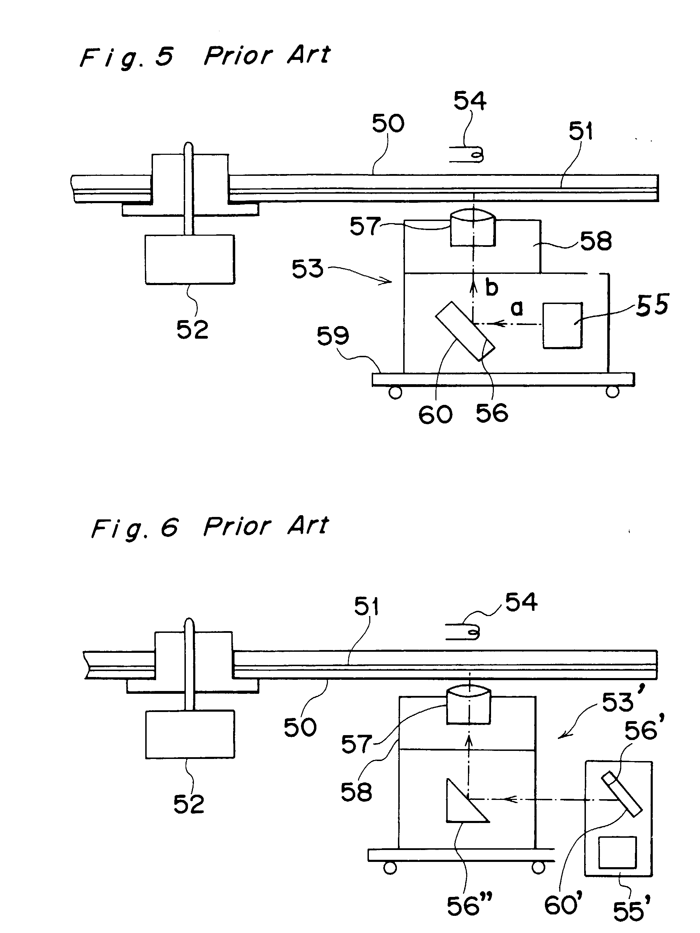

Fig. 5 schematically illustrates the conventional mirror drive mechanism employed in the optical pickup assembly of one-piece model. Referring to Fig. 5, there is shown a magneto-optical disc 50 having a recording medium 51 and adapted to be driven in one predetermined direction about its center by means of a drive motor 52. An optical read/write head generally identified by 53 and movable in a direction radially of the magneto-optical disc 50 projects a beam of light, particularly a laser beam, onto the magneto-optical disc 50 through an objective lens assembly 57 during any one of recording and playback modes. A coil 54 supported for movement in unison with the optical read/write head 53 and positioned on one side of the magneto-optical disc 50 opposite to the optical read/write head 53 is used to apply an magnetic field onto the magneto-optical disc 50 during the recording mode.

The optical read/write head 53 includes a laser source 55 for emitting a laser beam In a horizontal direction a parallel to the plane of rotation of the magneto-optical disc 50, a reflecting mirror 56 for deflecting the laser beam coming from the laser source 55 so as to travel towards the magneto-optical disc 50 in a direction b perpendicular to the magneto-optical disc 50, an objective lens assembly 57 disposed on the path of travel of the laser beam between the reflecting mirror 56 and the magneto-optical disc 50, and a lens drive mechanism 58. The objective lens assembly 57 is operable to converge the incoming laser beam at the recording medium 51 to form a minute spot of light thereon. The lens drive mechanism 58 is operable to drive the objective lens assembly 57 in a direction parallel to the optical axis thereof for focusing the minute spot of light cast on the magneto-optical disc 50.

The mirror drive mechanism 60 referred to above carries the reflecting mirror 56 and is operable to cause the reflecting mirror 56 to undergo a rocking motion about an axis lying parallel to the plane of rotation of the magneto-optical disc 50 and transverse to the radial direction of the magneto-optical disc 50 (which axis lies perpendicular to the plane of the drawing of Fig. 5). With this mirror drive mechanism 60, the position of the light spot with respect to the radial direction of the magneto-optical disc 50, i.e., a tracking direction, can be finely adjusted. As hereinbefore mentioned, the optical read/write head 53 including the lens drive mechanism 57 and the mirror drive mechanism 60 is movable in a direction radially of the magneto-optical disc 50 and is, for this purpose, mounted on a carriage 59 adapted to be driven by a linear motor as is well known to those skilled in the art.

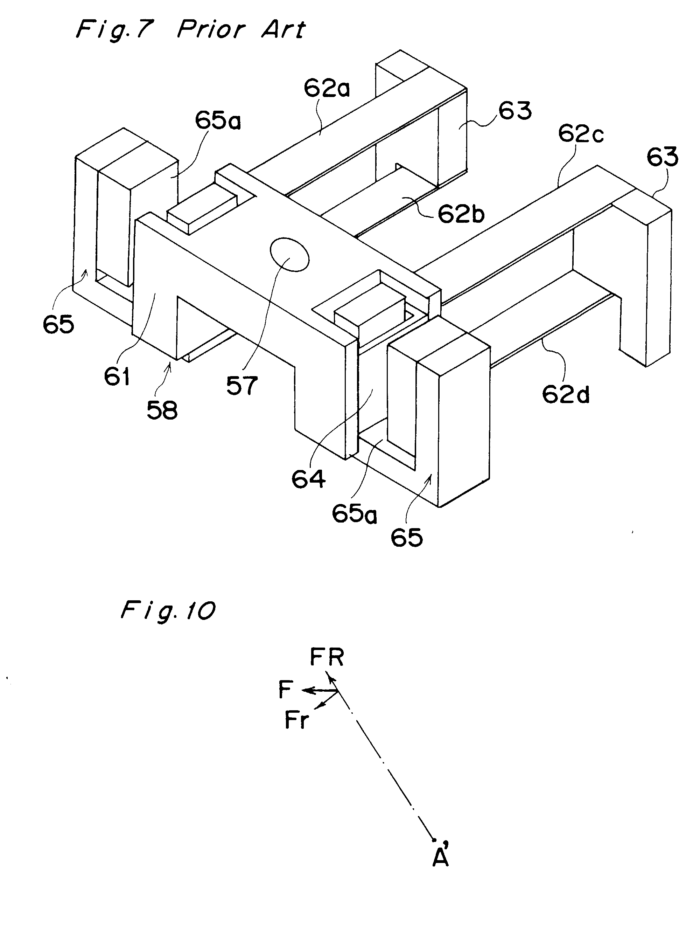

The details of the lens drive mechanism 58 used in the prior art mirror drive mechanism and shown ih Fig. 5 are best shown in Fig. 7. The lens drive mechanism 58 includes a lens holder 61 of generally rectangular configuration supporting the objective lens assembly 57 with its optical axis lying perpendicular to the magneto-optical disc 50 being rotated. This lens holder 61 is supported by fixed supports 63 by means of two pairs of upper and lower leaf springs 62a, 62b and 62c, 62d one above the other; one pair extending between one end of the lens holder 61 and one of the fixed supports 63 and the other pair extending between the other end of the lens holder 61 and the other of the fixed supports 63. The opposite ends of the lens holder 61 have respective drive coils 64 fixedly mounted thereon, a portion of each of the drive coils 64 being disposed within a magnetic gap 65a in an associated magnetic circuit 65 fixedly supported by a corresponding fixed support (not shown) for driving the lens holder 61 in a direction substantially parallel to the optical axis of the objective lens assembly 57.

In the construction described above, when an electric current is supplied to the drive coils 64 so as to flow therethrough in a predetermined direction, the objective lens assembly 57 can be driven together with the lens holder 61 in a direction substantially parallel to the optical axis of the objective lens assembly 57.

The conventional mirror drive mechanism employed in the optical pickup assembly of two-piece model is shown in Fig. 6. This two-piece model differs from the one-piece model of Fig. 5 in that an assembly of the laser source 55 and the reflecting mirror 56 is separated from an assembly of the objective lens assembly 57, the lens drive mechanism 58 and the carriage 59. More specifically, the optical read/write head identified by 53' in Fig. 6 comprises fixed and movable blocks: The fixed block includes a laser source 55' for emitting a laser beam in a vertical direction generally perpendicular to the plane of rotation of the magneto-optical disc 50 and a reflecting mirror 56' for deflecting the laser beam so as to travel in a horizontal direction and a mirror drive mechanism 60' carrying the reflecting mirror 56', and the movable block includes a reflecting mirror 56" for deflecting the laser beam reflected from the reflecting mirror 56' so as to travel in the vertical direction towards the magneto-optical disc 50, the objective lens assembly 57 and the lens drive mechanism 58.

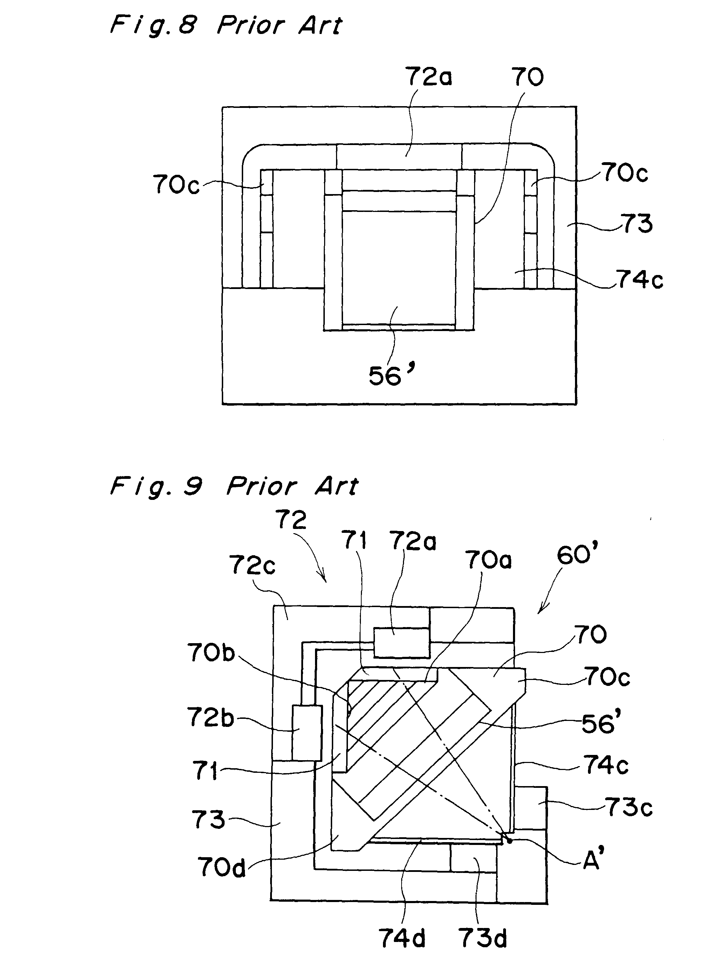

The prior art mirror drive mechanism employed in the pickup assembly of two-piece model and known from JP Laid-open Patent Publication No. 3-141043 is shown in schematic front elevational view in Fig. 8 and also in side sectional view in Fig. 9. Reference will now be made to Figs. 8 and 9 for the discussion of the details of the prior art mirror drive mechanism 60'.

The reflecting mirror 56' is fixedly mounted on a bottom face of a mirror holder 70 of a generally pyramid configuration having side faces 70a and 70b angled to the bottom face thereof. This mirror holder 70 is supported by means of leaf springs, as will be described later, with the bottom face thereof inclined relative to the mirror drive mechanism 60' while the side faces 70a and 70b of the mirror holder 70 lie parallel to bottom and front surfaces of the mirror drive device 60', respectively. A mirror drive coil 71 is wound around an apex portion of the mirror holder 70 of the generally pyramid configuration, representing a generally trapezoidal shape.

The mirror holder 70 of the generally pyramid configuration also has four corners, i.e., two upper corners 70c and two lower corners 70d (as viewed in Figs. 8 and 9), and the mirror holder 70 is yieldably supported by respective pairs of leaf springs 74c and 74d extending vertical and horizontal directions, respectively as viewed in Fig. 9. The pair of leaf springs 74c lying in the same first plane are connected at one end with the associated upper corners 70c of the mirror holder 70 and at the opposite end with respective fixtures 73c formed in the mirror holder 70 while extending in a vertical direction as viewed in Fig. 9. The pair of leaf springs 74d lying in the same second plane different from the first plane are connected at one end with the associated lower corners 70d of the mirror holder 70 and at the opposite end with respective fixtures 73d formed in the mirror holder 70 while extending in a horizontal direction as viewed in Fig. 9.

Thus, it will readily be seen that the pair of the leaf springs 74c and 74d extend on respective sides of the mirror 56' so as to be converged at a point A' lying at the point of intersection between respective extensions of the pairs of the leaf springs 74c and 74d while depicting a generally V-shape. Hence, the mirror holder 70 carrying the reflecting mirror 56' is capable of undergoing a rocking motion about the point A' at which the respective extensions of the pairs of the leaf springs 74c and 74d would intersect with each other.

A generally L-shaped yoke 72c having generally right-angled, horizontally extending arms on which respective permanent magnets 72a and 72b of a generally rectangular cubic shape are rigidly mounted is positioned on an upper portion of a support 73 with the permanent magnets 72a and 72b confronting respectively to associated portions of the mirror drive coil 71 that are held in contact with the side faces 70a and 70b of the mirror holder 70. The yoke 72c and the permanent magnets 72a and 72b carried thereby form a magnetic circuit 72 whereas the mirror drive coil 71 and the magnet circuit 72 form a mirror rocking means. In this design, a magnetic flux flows from a surface of one of the permanent magnets of the magnetic circuit 72 towards a surface of the other of the permanent magnets of the magnetic circuit 72, for example, from a surface of the permanent magnet 72a towards a surface of the permanent magnet 72b, while passing through a portion of the mirror drive coil 71 at an angle of 45 degrees relative to a surface of the reflecting mirror 56'.

In the above described construction, when an electric current is supplied to the mirror drive coil 71 so as to flow therethrough in a predetermined direction, a rocking force acts on the mirror holder 70, causing the light spot on the magneto-optical disc to be displaced in a direction radially of the magneto-optical disc to accomplish a tracking control.

The prior art mirror drive mechanism of the above described construction has, however, been found having a problem in that the direction in which a force necessary to drive the reflecting mirror acts tends to be extremely displaced from the direction of a tangential force acting tangentially to the path of angular movement of the mirror holder 70 and, hence, the reflecting mirror 56', about the point A'. More specifically, with reference to Fig. 10, the driving force F induced in the prior art mirror drive mechanism to angularly move the reflecting mirror 56' in one direction about the point A' acts in a direction deviating from the direction of the tangential force Fr, accompanied by a unnegligible quantity of a force FR acting in a direction orthogonal to the direction of the tangential force Fr. Therefore, other than the rocking force, an unnecessary moment acts on the mirror holder 70 as well, resulting in an undesirable resonance of the mirror holder 70 as a whole.

Also, according to the prior art mirror drive mechanism discussed above, there has been a problem associated with the necessity of detecting the amount of tilt of the reflecting mirror for the purpose of correcting an optical offset which would result from an inclination of the optical axis, locking the reflecting mirror in a preselected position when the mirror drive mechanism is accessed at a high speed in the case of the system of Fig. 5, and/or electrically inducing a damping at a point of primary resonance of the mirror drive mechanism.

### SUMMARY OF THE INVENTION

The present invention is therefore intended to provide an improved mirror drive mechanism wherein any moment other than the driving force can hardly act and an unwanted resonance would hardly occur and in which the amount of tilt of the reflecting mirror can be detected with a substantially simplified structure.

In order to accomplish the foregoing object of the present invention, an optical pickup device comprising a mirror drive mechanism for angularly guiding a beam of light is provided, which comprises a reflecting mirror having a reflecting surface defined therein; a mirror holder fo supporting the mirror; a support structure including generally elongated leaf spring means extending generally perpendicular to each other for supporting the mirror holder at a position on a center axis of the reflecting surface of the mirror; a mirror drive coil secured to a surface of the mirror holder opposite to the mirror; a magnetic circuit mounted on the support structure so as to confront the drive coil, said magnetic circuit including two permanent magnets mounted on the support structure with different magnetic poles thereof facing the drive coil. The optical pickup device is characterized in that the mirror drive coil is a generally flat coil mounted on a surface of the truncated apex portion of the mirror holder and wound in a plane perpendicular to the center axis of the mirror holder, said surface being parallel to the surface of the mirror.

Preferably, the optical pickup device may further comprise a light source for emitting a beam of light, said light source being mounted on the mirror holder for movement together therewith, and a photosensor means mounted on the support structure so as to receive a beam of light emitted from the light source.

Again preferably, a portion of a rear surface of the mirror opposite to the reflecting surface is formed into a reflector, and the mirror drive mechanism may further comprise a light source for emitting a beam of light, said light source being mounted on the support structure for directing the beam of light towards the reflector, and a photosensor means mounted on the support structure so as to receive the beam of light which has been emitted by the light source and subsequently reflected from the reflector.

Thus, according to the present invention, with the mirror drive coil employed in the mirror drive mechanism in the optical disc player for rocking the reflecting mirror the force necessary to rock the reflecting mirror can act in a direction substantially tangential to the center axis, thereby substantially eliminating any possible generation of the unwanted resonance.

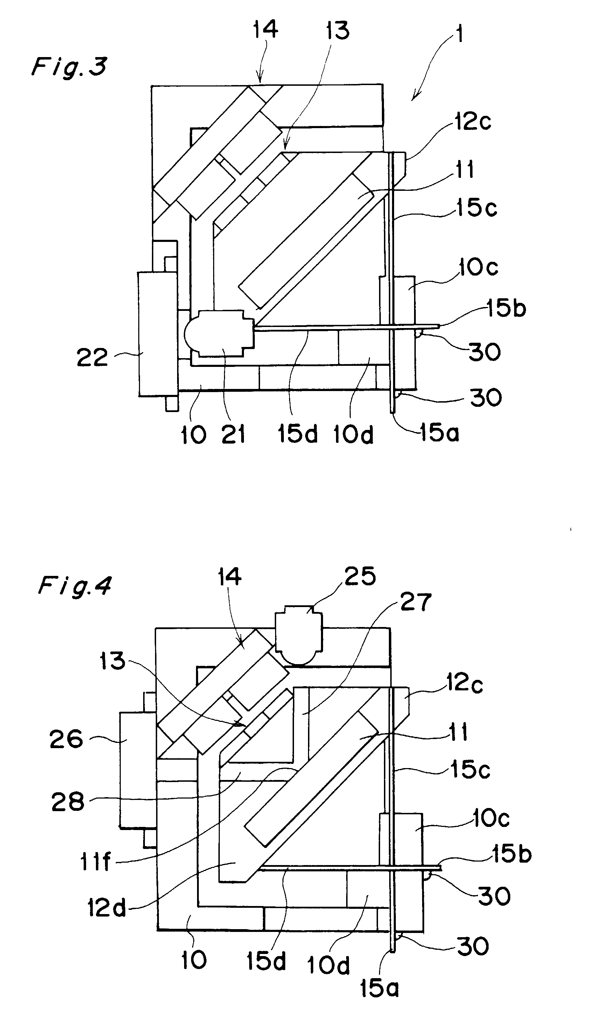

Also, the use of the mirror tilt detecting system comprising the light source, mounted on the mirror holder for movement together therewith, and the photosensor mounted on the support framework so as not to be affected by the angular movement of the mirror holder, is effective to provide an indication of the amount of tilt of the reflecting mirror without increasing the size of the mirror drive mechanism as a whole. Specifically, in this mirror tilt detecting system shown in any one of Figs. 3 and 4, the tilt of the reflecting mirror results in a displacement of the position of the beams sensed by the photosensor which subsequently generates the output proportional to the amount of tilt of the reflecting mirror.

### BRIEF DESCRIPTION OF THE DRAWINGS

This and other objects and features of the present invention will become clear from the following description taken in conjunction with preferred embodiments thereof with reference to the accompanying drawings, in which like parts are designated by like reference numerals and in which:
Fig. 1 is a schematic side sectional view of a mirror drive mechanism in an optical disc player according to a first preferred embodiment of the present invention;
Fig. 2 is a schematic front elevational view of the mirror drive mechanism shown in Fig. 1;
Fig. 3 is a schematic side sectional view of the mirror drive mechanism according to a second preferred embodiment of the present invention;
Fig. 4 is a schematic side sectional view of the mirror drive mechanism according to a third preferred embodiment of the present invention;
Fig. 5 is a schematic diagram of the conventional optical disc player utilizing the optical pickup assembly of one-piece model, showing the prior art mirror drive mechanism employed therein;
Fig. 6 is a schematic diagram of the conventional optical disc player utilizing the optical pickup assembly of two-piece model, showing the different prior art mirror drive mechanism employed therein;
Fig. 7 is a perspective view, on an enlarged scale, showing the lens drive mechanism employed in the optical pickup assembly shown in Fig. 5;
Fig. 8 is a schematic front elevational view of the prior art mirror drive mechanism;
Fig. 9 is a schematic side sectional view of the prior art mirror drive mechanism shown in Fig. 8; and
Fig. 10 is a schematic diagram showing a relationship between forces acting in the prior art mirror drive mechanism.

### DETAILED DESCRIPTION OF THE PREFERRED EMBODIMENTS

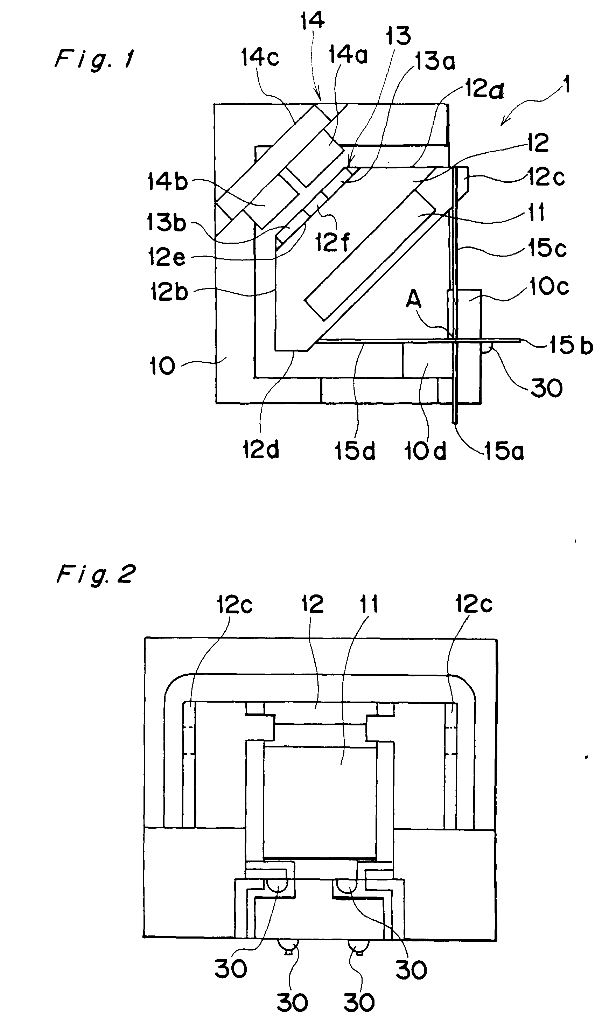

Referring first to Figs. 1 and 2, a mirror drive mechanism shown therein according to a first preferred embodiment of the present invention and generally identified by 1 is to be understood as employed in an optical information recording and/or reproducing apparatus for recording, reproducing or erasing information on and from a magneto-optical disc, respectively. This optical information recording and/or reproducing apparatus is well known in the art and may be of a construction shown in and described with reference to any one of Fig. 5 and 6 and, therefore, the details thereof will not be reiterated herein for the sake of brevity.

The mirror drive mechanism 1 includes a mirror holder 12 of a generally truncated pyramid shape for supporting a reflecting mirror 11 in an inclined fashion, for example, at an angle of 45 degrees relative to a horizontal plane. The mirror holder 12 of the generally truncated pyramid shape has four side faces, only two opposite members of which are identified by 12a and 12b, a bottom face on which the reflecting mirror 11 is rigidly mounted, and a truncated apex portion 12e, with the side faces inwardly inclined relative to the bottom face so as to converge at a point on one side of the truncated apex portion 12e remote from the reflecting mirror 11. This mirror holder 12 also has four corner regions, only two of which are identified by 12c and 12d, each of said corner regions being delimited by the neighboring side faces and the bottom face.

The mirror holder 12 is yieldably supported by a support framework 10 through first and second pairs of first and second leaf springs 15c and 15d with the opposite side faces 12a and 12b thereof lying substantially parallel to bottom and front surfaces of the mirror drive mechanism 1. In this condition, the bottom face of the mirror holder 12 on which the reflecting mirror 11 is rigidly mounted is, as described above, inclined at the angle of 45 degrees relative to the horizontal plane which, in the illustrated example, is parallel to the bottom surface of the mirror drive mechanism 1.

A surface of the truncated apex portion 12e of the mirror holder 12 lies parallel to the reflecting mirror 11 mounted on the bottom face thereof and has a protuberance 12f protruding outwardly therefrom. A generally flat mirror drive coil 13 is mounted on such surface of the truncated apex portion 12e and around the protuberance 12f.

The mirror holder 12 is yieldably supported by the first and second pairs of the first and second leaf springs 15c and 15d. The first pair of the first and second leaf springs 15c lying in the same first plane are secured at one end to the associated upper corners 12c of the mirror holder 12 and at the opposite end to respective fixtures 10c formed in the support framework 10 while extending in a vertical direction as viewed in Fig. 1. The second pair of the first and second leaf springs 15d lying in the same second plane perpendicular to the first plane are secured at one end to the associated lower corners 12d of the mirror holder 12 and at the opposite end to respective fixtures 10d formed in the support framework 10 while extending in a horizontal direction as viewed in Fig. 1.

Thus, it will readily be seen that the first and second pairs of the leaf springs 15c and 15d extends so as to depict a generally V-shape with their free ends positioned on respective side of the reflecting mirror 11 while the mirror holder 12 and, hence, the reflecting mirror 11, is supported for angular movement about a point A aligned with the point of intersection between the respective extensions of the first and second leaf springs 15c and 15d of the respective first and second pairs. It is to be noted that, in the above described arrangement, the first and second leaf springs 15c of the first pair and the first and second leaf springs 15d of the second pair are accommodated within respective spaces each delimited by the width of any one of the leaf springs 15c and 15d.

The support framework 10 carries a generally flat yoke 14c rigidly mounted thereon so as to face the mirror drive coil 13 and carrying first and second permanent magnets 14a and 14b. The first and second permanent magnets 14a and 14b on the flat yoke 14c are so positioned as to align with respective portions 13a and 13b of the mirror drive coil 13 which are opposite to each other in a direction conforming to the path of movement of the mirror holder 12 and, hence, that of the reflecting mirror 11 about the point A. The permanent magnets 14a and 14b so mounted on the yoke 14c are magnetized to have their respective poles opposite to each other, thereby completing a magnetic circuit 14. Thus, when a magnetic flux flows from a surface of one of the permanent magnets 14a and 14b of the magnetic circuit 14 towards a surface of the other of the permanent magnets 14a and 14b of the magnetic circuit 14, for example, from a surface of the permanent magnet 14a towards a surface of the permanent magnet 14b, a portion of the magnetic flux at a position adjacent the mirror drive coil 13 extends the opposite portions 13a and 13b thereof in a direction substantially perpendicular to a plane of the flat drive coil 13.

While the mirror drive mechanism shown in Figs. 1 and 2 are constructed as hereinbefore described, a supply of an electrical current through the mirror drive coil 13 in a predetermined direction brings about a rotating force tending to rotate the mirror holder 12 in a corresponding direction about the point A to tilt the reflecting mirror 11 together with the mirror holder 12. As the reflecting mirror 11 tilts in this way, the light spot cast on the magneto-optical disc moves in a direction radially of the magneto-optical disc to accomplish a well known tracking control. In this construction, since the mirror drive coil 13 is situated on the imaginary center line passing so as to divide the angle between the first and second pairs of the leaf springs 15c and 15d into equal sectors and is wound in a plane perpendicular to such imaginary center line, the direction in which the rotating force necessary to drive the reflecting mirror 11 in the manner described above lies parallel to the direction of the force acting tangentially to the path of angular movement of the reflecting mirror 11 about the point A and, therefore, only the rocking force acts on the mirror holder 12 with a possible occurrence of unwanted resonance being consequently minimized. Also, the foregoing construction is effective to reduce the size of the magnetic circuit 14.

It is to be noted that the supply of the electric current to the mirror drive coil 13 is carried out through a flexible printed circuit (FPC) board (not shown) by means of leaf springs soldered at 30 to respective arms of the leaf springs 15c and 15d of the first and second pairs. Since respective power supply portions 15a and 15b of the leaf springs soldered at 30 to the respective leaf springs 15c and 15d of the first and second pairs are not in a symmetrical layout relative to each other when viewed in a direction perpendicular to the plane in which each pair of the leaf springs 15a and 15b are arranged, no problem arise even though the arms of each pair of the leaf springs 15c and 15d intersect with each other.

Fig. 3 illustrates a second preferred embodiment of the present invention. While component parts of the device of Fig. 3 which are alike to those shown in Figs. 1 and 2 are designated by like reference numerals, a difference between the embodiment of Figs. 1 and 2 and the embodiment of Fig. 3 resides in that a combination of a light source and a photosensor, not shown in Figs. 1 and 2, is employed in the embodiment of Fig. 3 for detecting the amount of tilt of the reflecting mirror 11.

The light source in the form of a light emitting diode 21 is rigidly mounted on one end of a vertical surface of the mirror holder 12 for movement together therewith, whereas the photosensor, identified by 22, is secured to the support framework 10 so as to confront the light emitting diode 21. It is to be noted that the photosensor 22 used therein is of a two division type.

It is clear that, as the mirror holder 12 is angularly displaced to tilt the reflecting mirror 11 in the manner hereinbefore described in connection with the foregoing embodiment, the position of a light beam emitted from the light emitting diode 21 towards the photosensor 22 varies and, hence, the photosensor 22 generates a differential output proportional to the amount of tilt of the reflecting mirror 11.

In a further embodiment of the present invention shown in Fig. 4, the mirror holder 11 has a generally L-shaped light passage defined therein and including a vertical passage portion 27 and a horizontal passage portion 28. A light source, which in the instance shown in Fig. 4 is a semiconductor laser source 25, and a photosensor 26 are rigidly mounted on the support framework 10 so as to be aligned with the vertical and horizontal passage portions 27 and 28, respectively. A portion of a rear surface of the reflecting mirror 11 that is aligned with a bent of the light passage is formed into a reflector which reflects the incoming laser beam, guided along the vertical passage portion 27, into the horizontal passage portion 28 and then towards the photosensor 26. Thus, it will readily be seen that, as the reflecting mirror 11 tilts as a result of the angular movement of the mirror holder 12 in the manner hereinbefore described, the position of the laser beam impinging upon the photosensor 26 changes and, consequently, the photosensor 26 generates a differential output proportional to the amount of tilt of the reflecting mirror 11.

The output from the photosensor employed in any one of the second and third embodiments of the present invention may be utilized to correct an optical offset which would result from a tilt of the optical axis, to lock the reflecting mirror to avoid any possible oscillation thereof which would occur in the case of the optical pickup assembly of one-piece model, such as shown in Fig. 5 when the mirror drive mechanism makes a high speed access to a desired position beneath the magneto-optical disc, and/or to apply an electrical damping to a primary resonant point of the mirror drive mechanism 1.

It is to be noted that the layout and arrangement of a mirror tilt detecting system in combination with the light passage may not be always limited to that described above and shown in Fig. 4.

Thus, according to the present invention, the drive coil employed in the mirror drive mechanism in the optical disc player for rocking the reflecting mirror is wound at a location about a center axis of the mirror holder and in a plane perpendicular to the center axis and, at the same time, the magnetic circuit confronting the drive coil is constituted by the two permanent magnets with their different poles facing the drive coil. Accordingly, the force necessary to rock the reflecting mirror can act in a direction substantially tangential to the center axis, thereby substantially eliminating any possible generation of the unwanted resonance.

Also, the use of the mirror tilt detecting system comprising the light source, mounted on the mirror holder for movement together therewith, and the photosensor mounted on the support framework so as not to be affected by the angular movement of the mirror holder, is effective to provide an indication of the amount of tilt of the reflecting mirror without increasing the size of the mirror drive mechanism as a whole. Specifically, in this mirror tilt detecting system shown in any one of Figs. 3 and 4, the tilt of the reflecting mirror results in a displacement of the position of the beams sensed by the photosensor which subsequently generates the output proportional to the amount of tilt of the reflecting mirror.

## Claims

1. An optical pickup device comprising a mirror drive mechanism (1) for angularly guiding a beam of light, said mirror drive mechanism comprising:
a reflecting mirror (11) having a reflecting surface defined therein;
a mirror holder (12) for supporting the mirror (11);
a support structure (10) including generally elongated leaf spring means (15c, 15d) extending generally perpendicular to each other for supporting the mirror holder (12) at a position on a center axis of the reflecting surface of the mirror (11);
a mirror drive coil (13) secured to a surface of the mirror holder (12) opposite to the mirror (11), said drive coil (13) being wound around the center axis of the mirror holder (12);
a magnetic circuit (14) mounted on the support structure (10) so as to confront the drive coil (13) and including two permanent magnets (14a, 14b) mounted on the support structure (10) with different magnetic poles thereof facing the drive coil (13),
characterized in that the mirror drive coil (13) is a generally flat coil mounted on a surface of the truncated apex portion of the mirror holder and wound in a plane perpendicular to the center axis of the mirror holder (12), said surface being parallel to the reflecting mirror's surface.

2. The optical pickup device as claimed in Claim 1, said mirror drive mechanism further comprising a light source (21) for emitting a beam of light, said light source (21) being mounted on the mirror holder (12) for movement together therewith, and a photosensor means (22) mounted on the support structure (10) so as to receive a beam of light emitted from the light source (21).

3. The optical pickup device as claimed in Claim 1, wherein a portion of a rear surface of the mirror (11) opposite to the reflecting surface is formed into a reflector, and further comprising a light source (25) for emitting a beam of light, said light source (25) being mounted on the support structure (10) for directing the beam of light towards the reflector, and a photosensor means (26) mounted on the support structure (10) so as to receive the beam of light which has been emitted by the light source (25) and subsequently reflected from the reflector.

## Patentansprüche

1. Optischer Aufnehmer mit einem Spiegelantriebsmechanismus (1) zum winkelmäßigen Führen eines Lichtstrahls, wobei der Spiegelantriebsmechanismus folgendes aufweist:
- einen Reflexionsspiegel (11) mit einer an ihm festgelegten Reflexionsfläche;
- einen Spiegelhalter (12) zum Halten des Spiegels (11);
- eine Trägerstruktur (10) mit im wesentlichen langgestreckten Blattfedereinrichtungen (15c, 15d), die sich im wesentlichen rechtwinklig zueinander erstrecken, um den Spiegelhalter (12) an einer Position auf der Mittelachse der Reflexionsfläche des Spiegels (11) zu halten;
- eine Spiegelantriebsspule (13), die an einer Fläche des Spiegelhalters (12), dem Spiegel (11) gegenüberstehend, befestigt ist und die um die Mittelachse des Spiegelhalters (12) herumgewickelt ist und
- einen Magnetkreis (14), der so an der Trägerstruktur (10) befestigt ist, dass er der Antriebsspule (13) gegenübersteht, und der zwei Permanentmagnete (14a, 14b) aufweist, die an der Trägerstruktur (10) so angebracht sind, dass verschiedene Magnetpole derselben der Antriebsspule (13) zugewandt sind;
**dadurch gekennzeichnet, dass** die Spiegelantriebsspule (13) eine im wesentliche ebene Spule ist, die an einer Fläche des abgeschnittenen Spitzenbereichs des Spiegelhalters angebracht ist und in einer Ebene rechtwinklig zur Mittelachse des Spiegelhalters (12) gewickelt ist, wobei diese Fläche parallel zur Fläche des Reflexionsspiegels verläuft.

2. Optischer Aufnehmer nach Anspruch 1, bei dem der Spiegelantriebsmechanismus ferner eine Lichtquelle (21) zum Emittieren eines Lichtstrahls, die am Spiegelhalter (12) angebracht ist, um sich zusammen mit diesem zu bewegen, und eine Photosensoreinrichtung (22) aufweist, die an der Trägerstruktur (10) so angebracht ist, dass sie einen von der Lichtquelle (21) emittierten Lichtstrahl empfängt.

3. Optischer Aufnehmer nach Anspruch 1, bei der ein Teil der Rückseite des Spiegels (11), der von der Reflexionsfläche abgewandt ist, als Reflektor ausgebildet ist, und ferner mit einer Lichtquelle (25) zum Emittieren eines Lichtstrahls, die an der Trägerstruktur (10) angebracht ist, um den Lichtstrahl zum Reflektor zu lenken, und mit einer Photosensoreinrichtung (26), die so an der Trägerstruktur (10) angebracht ist, dass sie den Lichtstrahl empfängt, der von der Lichtquelle (25) emittiert wurde und anschließend vom Reflektor reflektiert wurde.

## Revendications

1. Dispositif de tête de lecture optique comprenant un mécanisme d'entraînement de miroir (1) destiné au guidage angulaire d'un faisceau lumineux, ledit mécanisme d'entraînement de miroir comprenant :
un miroir de réflexion (11) doté d'une surface de réflexion constituée sur celui-ci;
un support de miroir (12) destiné au soutien du miroir (11);
une structure de support (10) incluant des moyens ressorts plat de forme générale allongée (15c, 15d) se prolongeant d'une manière générale perpendiculairement l'un à l'autre afin de soutenir le support de miroir (12) en une position d'un axe central de la surface de réflexion du miroir (11);
une bobine d'entraînement de miroir (13) fixée sur une surface du support de miroir (12) opposée au miroir (11), ladite bobine d'entraînement (13) étant bobinée autour de l'axe central du support de miroir (12);
un circuit magnétique (14) monté sur la structure de support (10) de manière à s'opposer à la bobine d'entraînement (13), et incluant deux aimants permanents (14a, 14b) montés sur la structure de support (10) avec des pôles magnétiques différents de ceux-ci faisant face à la bobine d'entraînement (13),
caractérisé en ce que la bobine d'entraînement de miroir (13) est une bobine de forme générale plate montée sur une surface de la partie de sommet tronquée du support de miroir et bobinée dans un plan perpendiculaire à l'axe central du support de miroir (12), ladite surface étant parallèle à la surface du miroir de réflexion.

2. Dispositif de tête de lecture optique selon la revendication 1, ledit mécanisme d'entraînement de miroir comprenant en outre une source lumineuse (21) destinée à émettre un faisceau lumineux, ladite source lumineuse (21) étant montée sur le support de miroir (12) pour permettre un mouvement associé à celui-ci, et un moyen capteur photosensible (22) monté sur la structure de support (10) de manière à recevoir un faisceau lumineux émis par la source lumineuse (21).

3. Dispositif de tête de lecture optique selon la revendication 1, dans lequel une partie d'une surface arrière du miroir (11) opposée à la surface de réflexion constitue un réflecteur, et comprenant en outre une source lumineuse (25) destinée à émettre un faisceau lumineux, ladite source lumineuse (25) étant montée sur la structure de support (10) de manière à recevoir le faisceau lumineux qui a été émis par la source lumineuse (25) et consécutivement réfléchi par le réflecteur.
